# EUROPEAN PATENT APPLICATION

(11) **EP 2 874 389 A1**
(43) Date of publication of application: **20.05.2015**
(21) Application number: 14171204.2
(22) Date of filing: 04.06.2014
(51) Int. Cl.: H04N 5/64, H05K 9/00

(54) **Connector, tuner module having the same and antenna cable connecting method of the same**

(30) Priority: 15.10.2013 KR 20130122663
(71) Applicant: Samsung Electronics Co., Ltd, Gyeonggi-do 443-742 (KR)
(72) Inventor: Kim, Dong-wook, Gyeonggi-do (KR); Jin, Kyoung-shin, Gyeonggi-do (KR); Kwak, Byung-ju, Gyeonggi-do (KR); Lee, Seung-myen, Gyeonggi-do (KR); Shin, Hyun-jong, Gyeonggi-do (KR)
(74) Representative: Taor, Simon Edward William

(57) **Abstract**

Disclosed are a connector unit in which different types of connectors connected to antenna cables transmitting a radio frequency (RF) signal including a terrestrial broadcast signal and a satellite broadcast signal in a tuner module used for a slim TV are modified in arrangement and/or height based on structural characteristics without increasing an interval therebetween, thereby making better use of a space and enhancing convenience in cable connection, a tuner module having the same and an antenna cable connecting method of the same. The connector unit of a tuner module includes: a plurality of first connectors installed on a chassis of the tuner module to project in a first height; and at least one second connector installed on the chassis to project in a second height smaller than the first height, the at least one second connector being disposed between the first connectors.

## Description

Apparatuses and methods consistent with the exemplary embodiments relate to a tuner module used for a slim television (hereinafter, referred to as a "TV") such as an LED TV, an LCD TV and a PDP TV, more particularly to a connector unit in which different types of connectors connected to antenna cables transmitting a radio frequency (RF) signal including a terrestrial broadcast signal and a satellite broadcast signal are modified in arrangement and/or height based on structural characteristics without increasing an interval therebetween, thereby making better use of a space and enhancing convenience in cable connection, a tuner module having the same and an antenna cable connecting method of the same.

Generally, a tuner module, which is used for an input unit of a broadcast receiving apparatus such as a TV, receives a radio frequency (RF) signal including a terrestrial broadcast signal and a satellite broadcast signal, converts the RF signal into an intermediate frequency (IF) signal, and outputs the IF signal to the broadcast receiving apparatus.

The tuner module generally includes a chassis including an embedded circuit board for converting an RF signal into an IF signal and a connector unit formed at one side of the chassis and connected to antenna cables transmitting the RF signal from an antenna.

The connector unit typically includes an F-connector connected to an antenna cable transmitting a satellite broadcast signal with a frequency ranging from 3.5 GHz to 12 GHz and a Deutsche Industrie Normen (DIN) connector connected to an antenna cable transmitting a terrestrial broadcast signal with a frequency ranging from 44 MHz to 860 MHz.

Since the F-connector has a male thread formed on an external surface of a body, the F-connector may be combined with a jack of an antenna cable both in a socket coupling style and in a screw method that the male thread is combined with a female thread of a nut of the jack. On the contrary, the DIN connector has no male thread formed on an external surface and thus is combined with a jack of an antenna cable only in a socket coupling style.

Meanwhile, a TV may be designed to simultaneously watch a plurality of satellite broadcast channels on a single screen in response to consumers' demands. In this case, the tuner module needs as many satellite tuners to receive satellite broadcast signals as the number of designed satellite broadcast channels, and the number of F-connectors connected to antenna cables transmitting the satellite broadcast signals also increases accordingly.

As the number of F-connectors grows, the number of gaps between F-connectors needing a greater interval than DIN connectors and/or between an F-connector and a DIN connector also increases so as to smoothly screw bodies of the F-connectors with corresponding jacks of the antenna cables with a finger, resulting in an increase in size of the connector unit.

Unlike a cathode-ray tube type TV that easily secures a space, a slim TV such as an LED TV, an LCD TV and a PDP TV has a limited space for disposing a variety of components. In particular, the size of a main board on which a chassis is mounted behind a back cover of the TV is remarkably reduced, and accordingly the chassis may need mounting in a limited space.

Thus, the connector unit is designed in which F-connectors and a DIN connector are disposed as closely as possible in a limited space. As a result, the connector unit may not provide enough space to smoothly screw corresponding jacks of antenna cables with bodies of the F-connectors with a finger when the jacks of the antenna cables are screwed with the bodies of the F-connectors. In this instance, when the jacks of the antenna cables are combined with the bodies of the F-connectors, a user may have difficulty in screwing the jacks of the antenna cables with the F-connectors, particularly an F-connector disposed in the middle, with a finger.

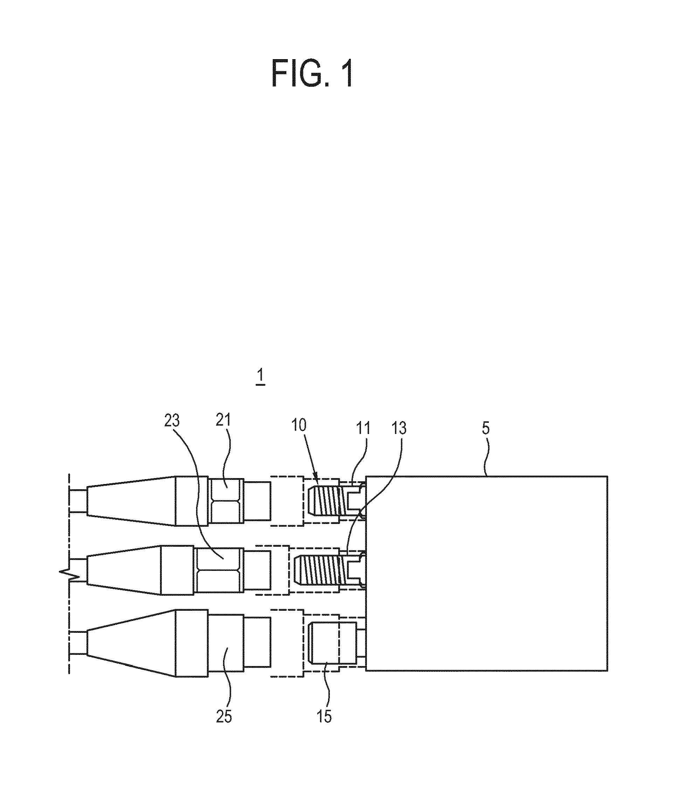

To prevent such a problem, as shown in FIG. 1, a conventional tuner module 1 includes a connector unit 10 in which an interposed F-connector 13 of connectors 11, 13 and 15 disposed side by side projects from a chassis 5 with a longer body length than an F-connector 11 disposed in an outer position.

The connector unit 10 further provides a finger coupling space with the projecting length of the interposed F-connector 13 in an upper position between the interposed F-connector 13 and the outer F-connector 11 and between the interposed F-connector 13 and a DIN connector 15. Thus, the user may easily screw a jack 23 to the interposed F-connector 13.

Further, even when corresponding jack 21 or 25 is combined with one of the outer F-connector 11 and the DIN connector 15, the finger coupling space is provided between the interposed F-connector 13 and the other of the outer F-connector 11 and the DIN connector 15 which is not combined with the jack 21 or 25, and thus the user may comparatively easily screw the jack 23 to the interposed F-connector 13.

However, when both jacks 21 and 25 are combined with the outer F-connector 11 and the DIN connector 15, an enough finger coupling space is not provided between the interposed F-connector 13 and the jacks 21 and 25 of the outer F-connector 11 and the DIN connector 15. Here, at least one of the jacks 21 and 25 may need to be disconnected from the outer F-connector 11 and the DIN connector 15 in order to easily screw the jack 23 to the interposed F-connector 13.

Also, the jacks 21 and 23 combined with the F-connectors 11 and 13 need manufacturing in two different kinds, and accordingly manufacture costs rise.

Moreover, the interposed F-connector 13 projecting longer and the outer F-connector 11 not projecting may seem to be defective, thus being visually unappealing and causing deterioration in product reliability of consumers.

In addition, due to a length difference between the interposed F-connector 13 projecting longer and the outer F-connector 11 not projecting, being disposed side by side, frequency interference may occur when satellite broadcast signals with comparatively high frequencies are transmitted.

An aspect of one or more exemplary embodiments is to provide a connector unit in which different types of connectors connected to antenna cables transmitting a radio frequency (RF) signal including a terrestrial broadcast signal and a satellite broadcast signal in a tuner module used for a slim TV are modified in arrangement and/or height based on structural characteristics without increasing an interval therebetween, thereby making better use of a space and enhancing convenience in cable connection, a tuner module having the same and an antenna cable connecting method of the same. The foregoing and/or other aspects may be achieved by providing a connector unit of a tuner module, the connector unit including: a plurality of first connectors installed on a chassis of the tuner module to project in a first height; and at least one second connector installed on the chassis to project in a second height smaller than the first height, the at least one second connector being disposed between the first connectors.

The first connectors each may include an F-connector. The first connectors may be connected to antenna cables transmitting a satellite broadcast signal, respectively.

The at least one second connector may include a Deutsche Industrie Normen (DIN) connector. The at least one second connector may be connected to antenna cables transmitting a terrestrial broadcast signal.

A height difference between the first height and the second height may be 1/3 or smaller of the height of the first connectors.

A height difference between the first height and the second height may desirably range 2 mm to 7 mm.

Alternatively, a height difference between the first height and the second height may be a minimum length which allows a user to screw antenna cables on the first connectors with a hand without interference by the second connector when combining the antenna cables with the first connectors.

In some such embodiments, the first connectors comprise a first body comprising a thread formed on an external surface thereof, and the least one second connector comprises a second body comprising a second connection terminal disposed inside and no thread formed on an external surface thereof.

Another aspect may be achieved by providing a connector unit of a tuner module, the connector unit including: a plurality of first connectors comprising a first body comprising a thread formed on an external surface thereof and a first connection terminal disposed inside; and at least one second connector comprising a second body comprising a second connection terminal disposed inside and no thread formed on an external surface thereof, the at least one second connector being disposed between the first connectors.

The first connectors each may include an F-connector. The first connectors may be connected to antenna cables transmitting a satellite broadcast signal, respectively. The at least one second connector may include a Deutsche Industrie Normen (DIN) connector. The at least one second connector may be connected to antenna cables transmitting a terrestrial broadcast signal.

The first connectors may be formed to project from a chassis higher than the at least one second connector. At this time, a height difference between the first connectors and the second connector may be 1/3 or smaller of a height of the first body. A height difference between the first connectors and the second connector may desirably range 2 mm to 7 mm.

Alternatively, a height difference between the first connectors and the second connector may be a minimum length which allows a user to screw antenna cables on the first connectors with a hand without interference by the second connector when combining the antenna cables with the first connectors.

Further another aspect may be achieved by providing a tuner module including: a chassis comprising a circuit board inside to convert a radio frequency (RF) signal into an intermediate frequency (IF) signal; and a connector unit as described above formed on the chassis to project and connected to antenna cables transmitting the RF signal from an antenna.

Also another aspect may be achieved by providing an antenna cable connecting method of a tuner module which includes the connector unit as described above including a plurality of first connectors and at least one second connector disposed between the first connectors, the method including: connecting a first antenna cable to one of the first connectors; connecting a second antenna cable to another of the first connectors; and connecting a third antenna cable to the second connector.

According to an aspect of the invention, there is provided a connector unit as set out in claim 1. Preferred features are set out in claims 2 to 6.

According to an aspect of the invention, there is provided a connector unit as set out in claim 7. Preferred features are set out in claims 8 to 13.

According to an aspect of the invention, there is provided a tuner module as set out in claim 14.
According to an aspect of the invention, there is provided an antenna cable connecting method of a tuner module as set out in claim 15.

The above and/or other aspects will become apparent and more readily appreciated from the following description of the exemplary embodiments, taken in conjunction with the accompanying drawings, in which:
FIG. 1 illustrates a connector unit of a conventional tuner module.
FIG. 2 is an exploded perspective view illustrating part of a tuner module including a connector unit according to an exemplary embodiment.
FIG. 3 is a plan view illustrating the connector unit and a chassis of the tuner module shown in FIG. 2.
FIGS. 4A and 4B are a cross-sectional view and a lateral view illustrating part of first and second F-connectors of a first connector of the connector unit shown in FIG. 3.
FIG. 5 is a cross-sectional view illustrating part of a DIN connector of a second connector of the connector unit shown in FIG. 3.
FIG. 6 is a block diagram illustrating a configuration of a circuit board of the tuner module shown in FIG. 2.
FIG. 7 is a flowchart illustrating an antenna cable connecting method of the tuner module according to an exemplary embodiment.

Hereinafter, a connector, a tuner module including the same and an antenna cable connecting method of the same according to exemplary embodiments will be described in detail with reference to the accompanying drawings.

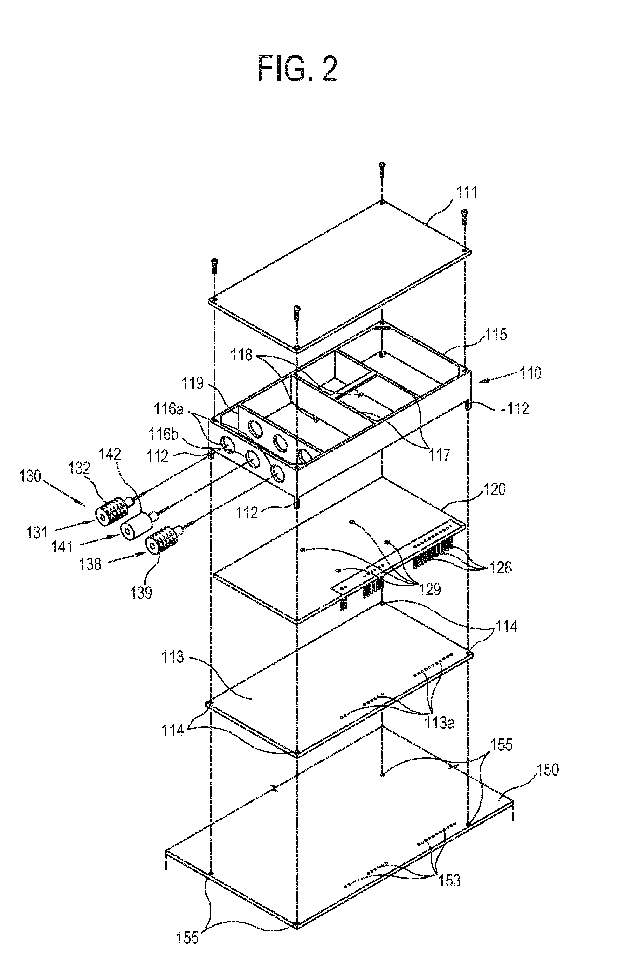

FIG. 2 is an exploded perspective view illustrating part of a tuner module 100 including a connector unit according to an exemplary embodiment.

The tuner module 100 according to the present embodiment is used as an input unit of a slim TV (not shown), such as an LED TV, an LCD TV and a PDP TV, functioning to display a plurality of satellite channels, for example, two satellite channels, within one screen. The tuner module 100 receives a radio frequency (RF) signal including a terrestrial broadcast signal and a satellite broadcast signal through a terrestrial broadcast antenna and a satellite broadcast antenna (not shown), converts the signal into an intermediate frequency (IF) signal, and outputs the signal to a main board 150 of the TV.

To this end, as shown in FIG. 2, the tuner module 100 according to the present embodiment is mounted on the main board 150 of the TV and includes a chassis 110, a connector unit 130 and a circuit board 120.

The chassis 110 includes a flat rectangular parallelepiped-shaped container 115 with an open top and bottom covered by upper and lower covers 111 and 113.

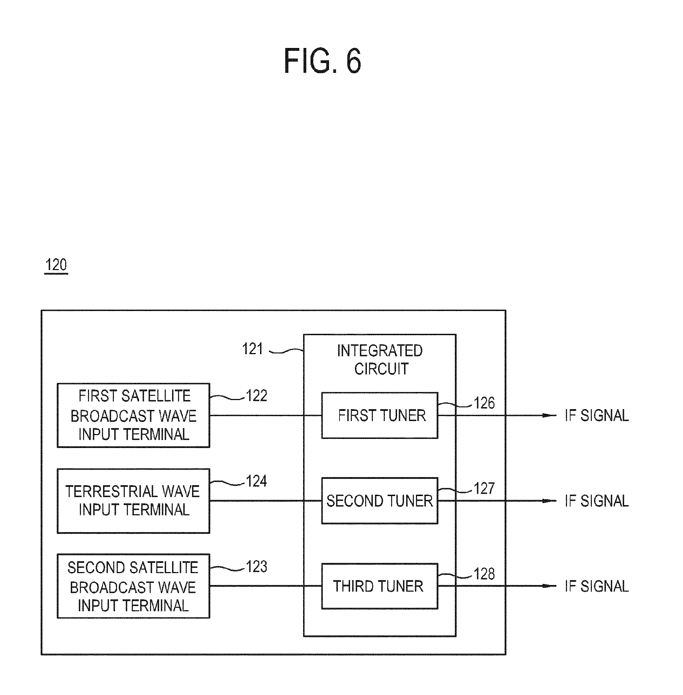

The container 115 includes a partition wall 117 dividing an interior space and the circuit board 120 mounted under the partition wall 117. The partition wall 117 divides a variety of components (not shown) of an integrated circuit (IC) 121 (FIG. 6) mounted on the circuit board 120 to shelter the components and blocks noise from the components.

Ground pins 118 fastened to ground holes 129 of the circuit board 120 for earthing the circuit board 120 are formed to project downwards on a lower side of the partition wall 117.

The container 115 may be formed by bending and punching a single metal plate.

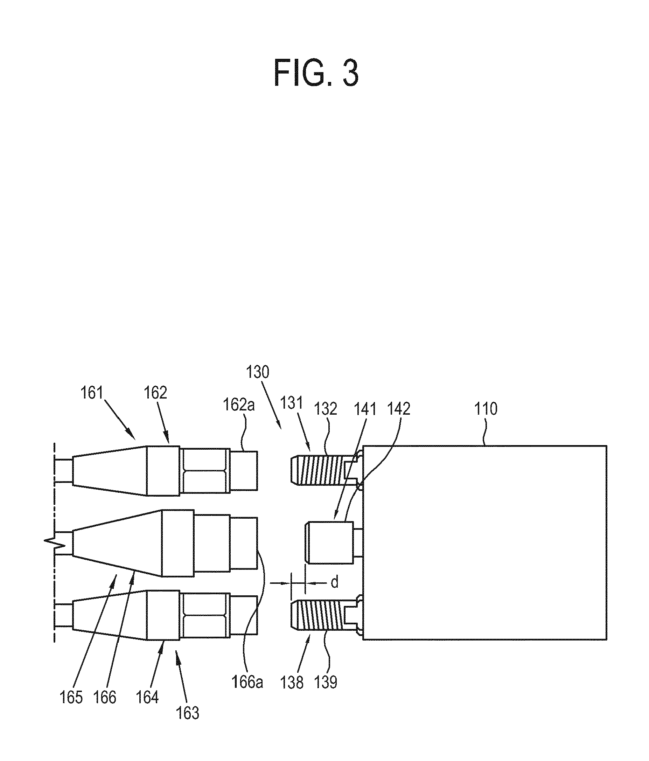

The connector unit 130 is connected to first to third antenna cables 161, 163 and 165 (FIG. 3) transmitting an RF signal from the satellite broadcast antenna and the terrestrial broadcast antenna and serves to relay the RF signal to the components of the IC 121 of the circuit board 120.

To this end, as shown in FIG. 3, the connector unit 130 is formed at one lateral side of the chassis 110 and includes a plurality of first connectors 131 and 138 and a second connector 141.

The first connectors 131 and 138 are connected to the first and second antenna cables 161 and 163 each transmitting an RF signal from the satellite broadcast antenna.

In the present embodiment, since the tuner module 100 is applied to the slim TV functioning to display a plurality of satellite channels, for example, two satellite channels, within one screen, a plurality of first connectors 131 and 138, for example, two connectors, corresponding to a number of satellite channels is provided.

The first connectors 131 and 138 may be provided as F-connectors 132 and 139 installed at one lateral side of the chassis 110 and projecting in a first height.

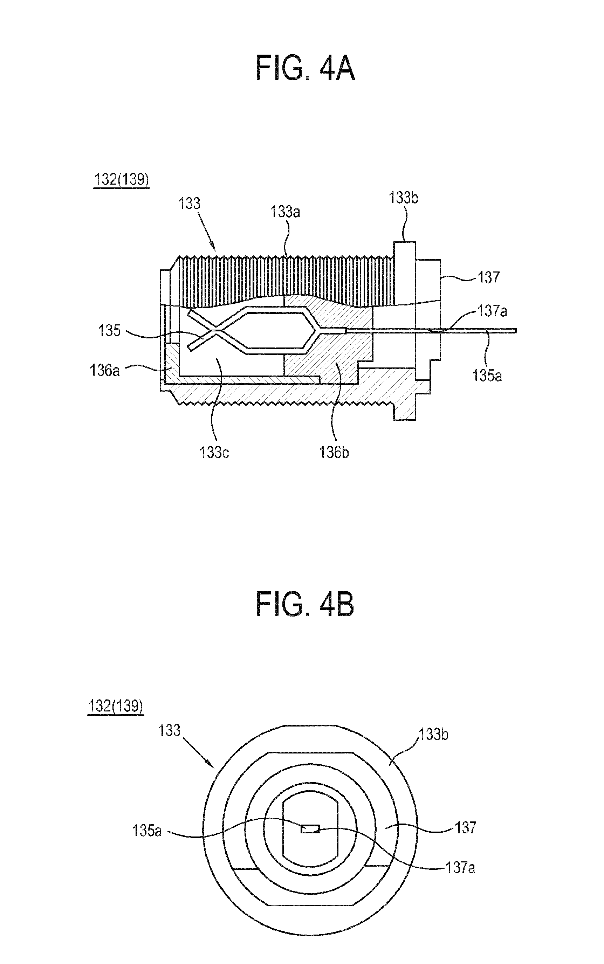

As shown in FIGS. 4A and 4B, a first F-connector 132 of this embodiment includes a first body 133, a first arm connection terminal 135 and a first lateral member 137.

The first body 133 is formed in a nearly cylindrical (e.g. a generally cylindrical) shape including a male thread 133a and a chassis fixing stopper 133b on an external surface, the male thread 133a engaging with a female thread of a nut 162a of a jack 162 of the first antenna cable 161.
The first arm connection terminal 135 is a part which a first male connection terminal (not shown) of the jack 162 of the first antenna cable 161 is inserted into and is electrically connected to and supported inside an accommodating space 133c of the first body 133 by an upper dielectric 136a and a lower dielectric 136b.

The first lateral member 137 is combined with one side of the first body 133 and formed with a terminal hole 137a at a center thereof so that the first arm connection terminal 135, supported by the upper dielectric 136a and the lower dielectric 136b, projects inside the chassis 110 by a predetermined distance. An end portion 135a of the first arm connection terminal 135 projecting inside the chassis 110 is connected to a first satellite broadcast wave input terminal 122 (FIG. 6) of the circuit board 120.

Furthermore, the first lateral member 137 is inserted into a first fixing hole 116a of the container 115 of the chassis 110 to be secured and supported by a reinforcing plate 119.

With this configuration, a user can screw the nut 162a of the jack 162 of the first antenna cable 161 on the male thread 133a of the first body 133 with a hand and can push the first male connection terminal into an entrance of the accommodating space 133c of the first body 133, thereby combining the first male connection terminal with the first female connection terminal 135. Here, the upper dielectric 136a and the lower dielectric 136b serve to insulate the first arm connection terminal 135 from the first body 133 and to maintain strength so that the first male connection terminal is securely fastened to the first arm connection terminal 135.

The second F-connector 139 of this embodiment is substantially the same as the first F-connector 132 except that an end portion 135a of a second arm connection terminal 135 projecting inside the chassis 110 is connected to a second satellite broadcast wave input terminal 123 of the circuit board 120.

The second connector 141 is formed to project at one lateral side of the chassis 110 with a second height smaller than the first height and disposed between the first connectors 131 and 138 at the same interval from the first connectors 131 and 138. Here, the interval between the second connector 141 and the first connectors 131 and 138 may be designed with a minimum width such that a jack 166 of a third antenna cable 165 is combined with the second connector in a socket coupling style, with the jacks 162 and 164 of the first and second antenna cables 161 and 163 being combined with the first connectors 131 and 138.

The second connector 141 is connected to the third antenna cable 165 transmitting an RF signal from the terrestrial broadcast antenna.

The second connector 141 may be provided as a Deutsche Industrie Normen (DIN) connector 142 installed with the second height at one side of the chassis 110.

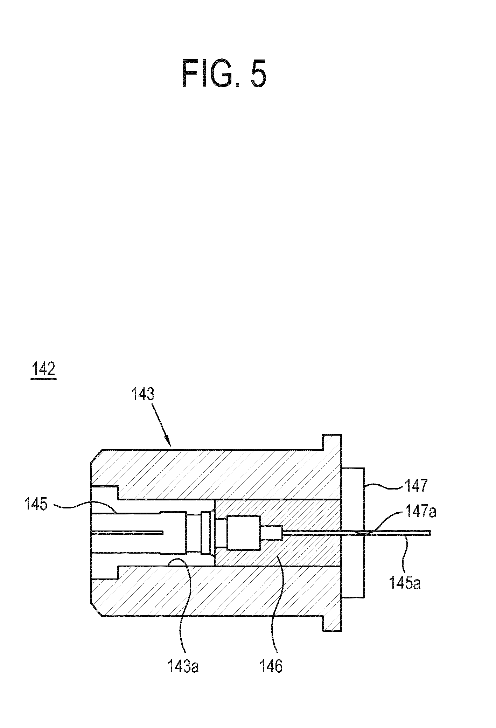

As shown in FIG. 5, the DIN connector 142 of this embodiment includes a second body 143, a second arm connection terminal 145 and a second lateral member 147.

The second body 143 is formed in a cylindrical shape including an installation space 143a for installing the second arm connection terminal 145 inside without a male thread formed on an external surface, unlike the first and second F-connectors 132 and 139.

The second arm connection terminal 145 is a part which a second male connection terminal (not shown) of the jack 166 of the third antenna cable 165 is inserted into and is electrically connected to and supported inside the installation space 143a of the second body 143 by a dielectric 146.

The second lateral member 147 is combined with one side of the second body 143 and formed with a terminal hole 147a at a center thereof so that the second arm connection terminal 145, supported by the dielectric 146, projects inside the chassis 110 by a predetermined distance. An end portion 145a of the second arm connection terminal 145 projecting inside the chassis 110 is connected to a terrestrial wave input terminal 124 of the circuit board 120.

Similarly to the first lateral member 137, the second lateral member 147 is also inserted into a second fixing hole 116b of the container 115 of the chassis 110 to be secured and supported by the reinforcing plate 119.

With this configuration, a user can push a cylindrical body 166a of the jack 166 of the third antenna cable 165 to the DIN connector 142 with a hand so that the DIN connector 142 is inserted into the cylindrical body 166a, thereby combining the second male connection terminal with the second female connection terminal 145. Here, the dielectric 146 serves to insulate the second arm connection terminal 145 from the second body 143 and to maintain strength so that the second female connection terminal 145 is securely fastened to the second body 143.

A height difference d between the first height of the first connectors 131 and 138 and the second height of the second connector 141 may be a minimum length, for example, 1/3 or shorter of the height of the first connectors 131 and 138, which allows the user to screw the jacks 162 and 164 of the first and second antenna cables 161 and 163 on the first connectors 131 and 138 with a hand without interference by the second connector 141 when combining the jacks 162 and 164 of the first and second antenna cables 161 and 163 with the first connectors 131 and 138. For instance, when the first height of the first connectors 131 and 138 is 20 mm, the difference between the first height and the second height is 7 mm or shorter, preferably 2 to 7 mm.

As the second connector 141 is formed to project at one lateral side of the chassis 110 with the second height smaller than the first height, the user may screw the jacks 162 and 164 of the first and second antenna cables 161 and 163 on upper portions of the first connectors 131 and 138 using an upper space of the second connector 141 without interference by the second connector 141 when combining the jacks 162 and 164 of the first and second antenna cables 161 and 163 with the first connectors 131 and 138. As a result, the user may easily combine the jacks 162 and 164 of the first and second antenna cables 161 and 163 with the first connectors 131 and 138.

Moreover, since both first connectors 131 and 138 are disposed outwards from the second connector 141, lateral sides of the first connectors 131 and 138 opposite sides thereof close to the second connector 141 are externally open. Thus, when combining the jacks 162 and 164 of the first and second antenna cables 161 and 163 with the first connectors 131 and 138, the user may screw the jacks 162 and 164 of the first and second antenna cables 161 and 163 on the first connectors 131 and 138 using externally open lateral spaces of the first connectors 131 and 138. Accordingly, as compared with a conventional arrangement in which one of the first connectors is disposed between the connectors, the user easily combine the jacks 162 and 164 of the first and second antenna cables 161 and 163 with the first connectors 131 and 138.
The circuit board 120 includes the IC 121 to convert an RF signal, such as a terrestrial broadcast signal and a satellite broadcast signal, input through the connector unit 130 into an IF signal.

As shown in FIG. 6, the IC 121 includes first to third tuner 126, 127 and 128.

The first tuner 126 converts an RF signal input through the first satellite broadcast wave input terminal 122 connected to the first F-connector 132 of the first connector 131 into an IF signal for a first broadcast channel. The second tuner 126 converts an RF signal input through the terrestrial wave input terminal 124 connected to the DIN connector 142 of the second connector 141 into an IF signal. The third tuner 128 converts an RF signal input through the second satellite broadcast wave input terminal 123 connected to the second F-connector 139 of the first connector 138 into an IF signal for a second broadcast channel. Here, the first tuner 126 and the third tuner 128 are used, instead of using a single tuner to receive a satellite broadcast, in order to simultaneously receive satellite broadcast signals of the first and second satellite channels since the tuner module 100 is applied to the slim TV functioning to display two satellite channels within one screen.

The first to third tuners 126, 127 and 128 may each include a circuit including a filter to convert an input RF signal into an IF signal, a tuning circuit, an amplifier and a mixer. Here, the first and third tuners 126 and 128 may further include a low noise block down (LNB) converter, for example, to lower a satellite broadcast frequency ranging from 3.5 GHz to 12 GHz to a tuner input frequency ranging from 950 MHz to 2,150 MHz, as compared with the second tuner 127.

Configurations of the first to third tuners 126, 127 and 128 are generally known in the art, and thus descriptions thereof are omitted herein.

The circuit board 120 including the IC 121 is disposed under the partition wall 117 and sealed in the container 115 by the lower cover 113 of the chassis 110. Connection terminals 128 are formed to project on a lower surface of the circuit board 120, the connection terminals 128 being combined with connection terminal holes 153 of the main board 150 of the slim TV through first through holes 113a of the lower cover 113 when the chassis 110 is mounted on the main board 150. The connection terminals 128 are electrically connected to the connection terminal holes 153 and transmit an IF signal output from the first to third tuners 126, 127 and 128 to various components of the main board 150.

Fixing pins 112 are formed to project on four lower corners of the container 115 of the chassis 110 so as to securely fasten the circuit board 120 and the chassis 110 to the main board 150. Second through holes 114 and fixing holes 115 are formed on the lower cover 113 and the main board 150, respectively, corresponding to the fixing pins 112. The fixing pins 112 are fastened to the fixing holes 155 through the second through holes 114 of the lower cover 113 when the chassis 110 is mounted on the main board 150.

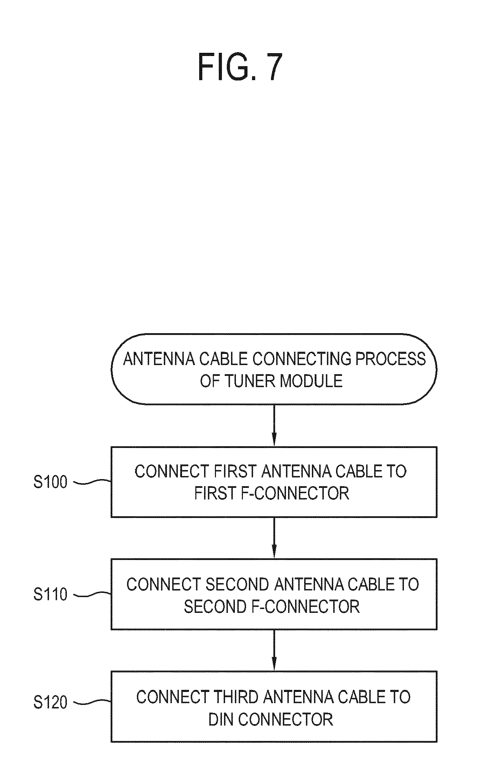

Hereinafter, an operation of connecting the jacks 162, 164 and 166 of the first to third antenna cables 161, 163 and 165 to the connector unit 130 of the tuner module 100 according to an exemplary embodiment will be described with reference to FIG. 7.

First, a user connects the jack 162 of the first antenna cable 161 to one of the first and second F-connectors 132 and 139 of the first connectors 131 and 138 disposed in an outward or outer position of the connector unit 130, for example, the first F-connector 132 of the first connector 131, in the same manner as described above with reference to FIGS. 4A and 4B (S100).

Subsequently, the user connects the jack 164 of the second antenna cable 163 to the other of the first and second F-connectors 132 and 139 of the first connectors 131 and 138, for example, the second F-connector 139 of the first connector 138, in the foregoing manner (S110).

Next, the user connects the jack 166 of the third antenna cable 165 to the DIN connector 142 of the second connector 141 disposed in the middle of the connector unit 130 in the same manner as described above with reference to FIG. 5 (S120).

Then, the operation of connecting the jacks 162, 164 and 166 of the first to third antenna cables 161, 163 and 165 to the connector unit 130 of the tuner module 100 is completed.

An operation of disconnecting the jacks 162, 164 and 166 of the first to third antenna cables 161, 163 and 165 from the connector unit 130 of the tuner module 100 may be achieved by conducting operations S110 to S120 in reverse order.
As described above, according to the connector unit 130, the tuner module 100 including the same and an antenna cable connecting method of the same, since the second connector 141 is formed to project at one lateral side of the chassis 110 with the second height smaller than the first height of the first connectors 131 and 139, the user may screw the jacks 162 and 164 of the first and second antenna cables 161 and 163 on upper portions of the first and second F-connectors 132 and 139 of the first connectors 131 and 138 using an upper space of the second connector 141. As a result, the user may easily combine the jacks 162 and 164 of the first and second antenna cables 161 and 163 with the first and second F-connectors 132 and 139 of the first connectors 131 and 138.

Further, the first and second F-connectors 132 and 139 of the first connectors 131 and 138 including the male thread 133a formed on the external surface of the first body 133 are disposed in an outward or outer position of the connector unit 130 and the DIN connector 142 of the second 141 having no male thread formed on the external surface of the second body 143 is disposed between the first and second F-connectors 132 and 139, so that lateral sides of the first and second F-connectors 132 and 139 opposite sides thereof close to the second connector 141 are externally open. Thus, the user may screw the jacks 162 and 164 of the first and second antenna cables 161 and 163 on the first and second F-connectors 132 and 139 using externally open lateral spaces of the first and second F-connectors 132 and 139, thereby easily combining the jacks 162 and 164 of the first and second antenna cables 161 and 163 with the first and second F-connectors 132 and 139.

As discussed above, embodiments of the invention can provide a connector unit of a tuner module, the connector unit comprising: a plurality of first connectors installable on a chassis of the tuner module to project to a first height; and at least one second connector installable on the chassis to project to a second height smaller than the first height, the at least one second connector being disposed between the first connectors.

In some embodiments, the first connectors each comprise an F-connector. In some embodiments, the at least one second connector comprises a Deutsche Industrie Normen (DIN) connector.

In some embodiments, a height difference between the first height and the second height is 1/3 or smaller of the height of the first connectors. In some embodiments, a height difference between the first height and the second height ranges from 2 mm to 7 mm. In some embodiments, a height difference between the first height and the second height is a minimum length which allows a user to screw antenna cables on the first connectors with a hand without interference by the second connector when combining the antenna cables with the first connectors.

In some embodiments, the first connectors comprise a first body comprising a thread formed on an external surface thereof, and the least one second connector comprises a second body comprising a second connection terminal disposed inside and no thread formed on an external surface thereof.

As discussed above, embodiments of the invention can also provide a connector unit of a tuner module, the connector unit comprising: a plurality of first connectors comprising a first body comprising a thread formed on an external surface thereof and a first connection terminal disposed inside; and at least one second connector comprising a second body comprising a second connection terminal disposed inside and no thread formed on an external surface thereof, the at least one second connector being disposed between the first connectors.

In some embodiments, the first connectors each comprise an F-connector. In some embodiments, the at least one second connector comprises a Deutsche Industrie Normen (DIN) connector.

In some such embodiments, the first connectors are formed to project from a chassis higher than the at least one second connector. In some such embodiments, a height difference between the first connectors and the second connector is 1/3 or smaller of a height of the first body. In some embodiments, a height difference between the first connectors and the second connector ranges from 2 mm to 7 mm. In some embodiments, a height difference between the first connectors and the second connector is a minimum length which allows a user to screw antenna cables on the first connectors with a hand without interference by the second connector when combining the antenna cables with the first connectors.

Embodiments of the invention can also provide a tuner module comprising: a chassis comprising a circuit board to convert a radio frequency (RF) signal into an intermediate frequency (IF) signal; and a connector unit of any of the above embodiments, the connector unit being connected to antenna cables that are arranged to transmit the RF signal from an antenna.

Embodiments of the invention can also provide an antenna cable connecting method of a tuner module which comprises the connector unit of any of the above embodiments comprising a plurality of first connectors and at least one second connector disposed between the first connectors, the method comprising: connecting a first antenna cable to one of the first connectors; connecting a second antenna cable to another of the first connectors; and connecting a third antenna cable to the second connector.
According to the foregoing exemplary embodiments, different types of connectors 132, 139 and 142 connected to the first to third antenna cables 161, 163 and 165 may be modified in arrangement and/or height based on structural characteristics without increasing an interval therebetween, thereby making better use of a space and enhancing convenience in cable connection.

Although a few exemplary embodiments have been shown and described, it will be appreciated by those skilled in the art that changes may be made in these exemplary embodiments without departing from the principles of the invention, the scope of which is defined in the appended claims and their equivalents.

## Claims

1. A connector unit of a tuner module, the connector unit comprising:
a plurality of first connectors installable on a chassis of the tuner module to project to a first height; and
at least one second connector installable on the chassis to project to a second height smaller than the first height,
the at least one second connector being disposed between the first connectors.

2. The connector unit of claim 1, wherein the first connectors each comprise an F-connector.

3. The connector unit of claim 1 or 2, wherein the at least one second connector comprises a Deutsche Industrie Normen (DIN) connector.

4. The connector unit of any one of claims 1 to 3, wherein a height difference between the first height and the second height is 1/3 or smaller of the height of the first connectors.

5. The connector unit of any one of claims 1 to 4, wherein a height difference between the first height and the second height ranges from 2 mm to 7 mm.

6. The connector unit of any one of claims 1 to 5, wherein a height difference between the first height and the second height is a minimum length which allows a user to screw antenna cables on the first connectors with a hand without interference by the second connector when combining the antenna cables with the first connectors.

7. A connector unit of a tuner module, the connector unit comprising:
a plurality of first connectors comprising a first body comprising a thread formed on an external surface thereof and a first connection terminal disposed inside; and
at least one second connector comprising a second body comprising a second connection terminal disposed inside and no thread formed on an external surface thereof,
the at least one second connector being disposed between the first connectors.

8. The connector unit of claim 7, wherein the first connectors each comprise an F-connector.

9. The connector unit of claim 7 or 8, wherein the at least one second connector comprises a Deutsche Industrie Normen (DIN) connector.

10. The connector unit of any one of claims 7 to 9, wherein the first connectors are formed to project from a chassis higher than the at least one second connector.

11. The connector unit of claim 10, wherein a height difference between the first connectors and the second connector is 1/3 or smaller of a height of the first body.

12. The connector unit of claim 10 or 11, wherein a height difference between the first connectors and the second connector ranges from 2 mm to 7 mm.

13. The connector unit of any one of claims 10 to 12, wherein a height difference between the first connectors and the second connector is a minimum length which allows a user to screw antenna cables on the first connectors with a hand without interference by the second connector when combining the antenna cables with the first connectors.

14. A tuner module comprising:
a chassis comprising a circuit board to convert a radio frequency (RF) signal into an intermediate frequency (IF) signal; and
a connector unit of any one of claims 1 to 13 installed on the chassis, the connector unit being connected to antenna cables that are arranged to transmit the RF signal from an antenna.

15. An antenna cable connecting method of a tuner module which comprises the connector unit of any one of claims 1 to 13 comprising a plurality of first connectors and at least one second connector disposed between the first connectors, the method comprising:
connecting a first antenna cable to one of the first connectors;
connecting a second antenna cable to another of the first connectors; and
connecting a third antenna cable to the second connector.
